# EUROPEAN PATENT APPLICATION

(11) **EP 4 793 996 A1**
(43) Date of publication of application: **19.08.2026**
(21) Application number: 25209834.8
(22) Date of filing: 20.10.2025
(51) Int. Cl.: H01M 4/02, H01M 10/04, H01M 50/533

(54) **ELECTRODE ASSEMBLY AND SECONDARY BATTERY INCLUDING THE SAME**

(30) Priority: 13.02.2025 KR 20250018912
(71) Applicant: SAMSUNG SDI CO., LTD., Yongin-si, Gyeonggi-do 17084 (KR)
(72) Inventor: GUEN, Min Hyung, Suwon-si, Gyeonggi-do 16678 (KR)
(74) Representative: Marks & Clerk LLP

(57) **Abstract**

An electrode assembly, including a plurality of first electrode plates, a plurality of second electrode plates spaced apart from the plurality of first electrode plates, separators between the plurality of first electrode plates and the plurality of second electrode plates, and first electrode tabs connected to the plurality of first electrode plates, wherein the first electrode tabs include a plurality of first inner electrode tabs connected to some of the plurality of first electrode plates and a plurality of first outer electrode tabs connected to others of the plurality of first electrode plates, the plurality of first inner electrode tabs and the plurality of first outer electrode tabs being spaced apart from the plurality of first electrode plates.

## Description

### BACKGROUND

### 1. Field

The present disclosure relates to an electrode assembly and a secondary battery including the same.

### 2. Description of the Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is only intended to improve understanding of the background of the present disclosure, and thus may include information that does not constitute the related art.

### SUMMARY

The present disclosure is directed to providing an electrode assembly and a secondary battery in which a length of an electrode tab is controlled to be optimally designed and an overlapping amount of electrode tabs is minimized to easily perform laser welding and minimize foreign matter generated during the laser welding.

In accordance with one aspect of the present disclosure an electrode assembly, includes a plurality of first electrode plates, a plurality of second electrode plates spaced apart from the plurality of first electrode plates, separators between, e.g. disposed between, the plurality of first electrode plates and the plurality of second electrode plates, and first electrode tabs connected to the plurality of first electrode plates, wherein the first electrode tabs include a plurality of first inner electrode tabs connected to some of the plurality of first electrode plates and a plurality of first outer electrode tabs connected to others of the plurality of first electrode plates, the plurality of first inner electrode tabs and the plurality of first outer electrode tabs being spaced apart from the plurality of first electrode plates.

The plurality of first inner electrode tabs and the plurality of first outer electrode tabs may extend from the plurality of first electrode plates in a first direction, and the plurality of first inner electrode tabs and the plurality of first outer electrode tabs may face, e.g. may be disposed to face, each other in a second direction intersecting the first direction.

A length of the plurality of first inner electrode tabs in the first direction may increase in the second direction, and a length of the plurality of first outer electrode tabs in the first direction may increase in a direction opposite to the second direction.

That is: the plurality of first inner electrode tabs may be arranged in the second direction (e.g. stacked along the Y-axis direction) and each of the plurality of first inner electrode tabs may have a length in the first direction (e.g. along the X-axis direction), and the lengths of the respective first inner electrode tabs may increase in the second direction; and the plurality of first outer electrode tabs may be arranged in the second direction (e.g. stacked along the Y-axis direction), and each of the plurality of first outer electrode tabs may have a length in the first direction (e.g. along the X-axis direction), and the lengths of the respective first outer electrode tabs may increase in a direction opposite to the second direction (e.g. along the -Y axis direction).

The lengths of each of the plurality of first inner electrode tabs in the first direction and the lengths of the plurality of first outer electrode tabs in the first direction may be 6 mm or more and 12 mm or less.

A width of the plurality of first inner electrode tabs in a third direction may decrease in the second direction, and a width of the plurality of first outer electrode tabs in the third direction may decrease in the direction opposite to the second direction, and the third direction may intersect the first direction and the second direction.

That is: each of the plurality of first inner electrode tabs may have a width in a third direction (e.g. along the Z-axis direction) and the respective widths of the plurality of first inner electrode tabs may decrease in the second direction (e.g. along the Y axis direction); and each of the plurality of first outer electrode tabs may have a width in a third direction (e.g. along the Z-axis direction) and the respective widths of the plurality of first outer electrode tabs may decrease in the direction opposite to the second direction (e.g. along the -Y axis direction).

The plurality of first inner electrode tabs and the plurality of first outer electrode tabs may be point-symmetric with each other.

The plurality of first inner electrode tabs may be bent in the second direction, and the plurality of first outer electrode tabs are bent in the direction opposite to the second direction.

The plurality of first inner electrode tabs may not overlap the plurality of first outer electrode tabs in the first direction.

Each of the plurality of first inner electrode tabs may include a convex portion, e.g. formed to be convex, on or extending from one surface thereof and facing the plurality of first outer electrode tabs, and each of the plurality of first outer electrode tabs may include a concave portion, e.g. formed to be concave, in one surface thereof facing the plurality of first inner electrode tabs, the concave portion configured to accommodate the convex portion.

The convex portion and the concave portion may face, e.g. may be disposed to face, each other in the second direction.

The plurality of first inner electrode tabs may be bent in the second direction, and the plurality of first outer electrode tabs may be bent in the direction opposite to the second direction.

The plurality of first inner electrode tabs may not overlap the plurality of first outer electrode tabs in the first direction.

The electrode assembly may further include second electrode tabs connected to the plurality of second electrode plates, wherein the second electrode tabs may include second inner electrode tabs connected to some of the plurality of second electrode plates, and second outer electrode tabs connected to others of the plurality of second electrode plates, the plurality of second outer electrode tabs being spaced apart from the plurality of second inner electrode tabs.

The first electrode tabs and the second electrode tabs may extend from the electrode assembly in a first direction.

The plurality of second inner electrode tabs and the plurality of second outer electrode tabs may extend from the plurality of second electrode plates in the first direction, and the plurality of second outer electrode tabs and the plurality of second inner electrode tabs may face, e.g. may be disposed to face, each other in a second direction intersecting the first direction.

The first electrode tabs may extend from the electrode assembly in a first direction, and the second electrode tabs may extend from the electrode assembly in a direction opposite to the first direction.

The plurality of second inner electrode tabs and the plurality of second outer electrode tabs may extend from the plurality of second electrode plates in the direction opposite to the first direction, and the plurality of second outer electrode tabs and the plurality of second inner electrode tabs may face, e.g. may be disposed to face, each other in a second direction intersecting the first direction.

The plurality of second inner electrode tabs and the plurality of second outer electrode tabs may be bent toward each other, and the plurality of second inner electrode tabs may not overlap the plurality of second outer electrode tabs in a first direction.

In accordance with another aspect of the present disclosure, a secondary battery includes the electrode assembly according to the first aspect, a case accommodating the electrode assembly, a cap plate configured to seal the case, and a first terminal protruding outward from the cap plate, the first terminal being connected to the first electrode tabs.

The electrode assembly may further include a second electrode tab, and the secondary battery may further include a second terminal spaced apart from the first terminal, the second terminal being connected to the second electrode tab.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a schematic perspective view illustrating a configuration of a battery pack according to various embodiments of the present disclosure;
FIG. 2 is a schematic perspective view illustrating a configuration of a secondary battery according to a first embodiment of the present disclosure;
FIG. 3 is a schematic exploded perspective view illustrating the configuration of the secondary battery according to the first embodiment of the present disclosure;
FIG. 4 is a schematic cross-sectional view illustrating the configuration of the secondary battery according to the first embodiment of the present disclosure;
FIG. 5 is a view illustrating a configuration of an electrode assembly according to the first embodiment of the present disclosure;
FIG. 6 is a schematic perspective view illustrating a first electrode tab of the electrode assembly according to the first embodiment of the present disclosure;
FIG. 7 is a cross-sectional view along line VII-VII of FIG. 6;
FIG. 8 is a schematic plan view illustrating an electrode tab of the electrode assembly according to the first embodiment of the present disclosure;
FIG. 9 is a schematic side view illustrating the first electrode tab of the electrode assembly according to the first embodiment of the present disclosure;
FIG. 10 is a view illustrating a bent state of the first electrode tab of the electrode assembly according to the first embodiment of the present disclosure;
FIG. 11 is a schematic perspective view illustrating a modified example of the first electrode tab of the electrode assembly according to an embodiment of the present disclosure;
FIG. 12 is a schematic perspective view illustrating the modified example of the electrode tab of the electrode assembly illustrated in FIG. 11;
FIG. 13 is a schematic perspective view illustrating a first electrode tab of an electrode assembly according to a second embodiment of the present disclosure;
FIG. 14 is a cross-sectional view along line XIV-XIV of FIG. 13;
FIG. 15 is a schematic side view illustrating the first electrode tab of the electrode assembly according to the second embodiment of the present disclosure; and
FIG. 16 is a view illustrating a bent state of the first electrode tab of the electrode assembly according to the second embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

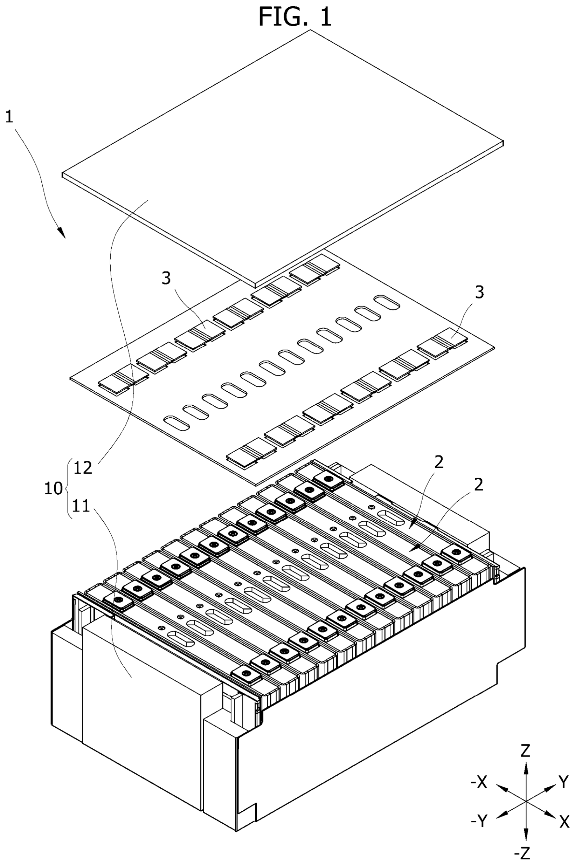

FIG. 1 is a schematic perspective view illustrating a configuration of a battery pack 1 according to various embodiments of the present disclosure.

Referring to FIG. 1, the battery pack 1 according to the present embodiment may include a housing 10 and a secondary battery 2.

The housing 10 may form the overall exterior of the battery pack 1 and provide a space in which the secondary battery 2 may be accommodated.

The housing 10 according to the present embodiment may include a housing body 11 and a cover 12.

The housing body 11 may be formed in a hollow shape of which one side is open. A cross-sectional shape of the housing body 11 may be changed to any of various shapes such as a polygonal shape, a circular shape, and an elliptical shape.

The cover 12 may be coupled or couplable to the housing body 11 and close an inner space of the housing body 11. As an example, the cover 12 may be formed in substantially a plate shape and disposed to face the open side of the housing body 11. The cover 12 may be fixed to the housing body 11 by any of various coupling methods such as bolting, welding, and fitting.

The secondary battery 2 may function as a unit structure which stores and supplies power in the battery pack 1.

The secondary battery 2 may be disposed in the housing 10. In the example battery pack 1, a plurality of the secondary batteries 2 are provided. The plurality of secondary batteries 2 may be disposed in two or more rows in any one direction of a width direction (+X-axis direction in FIG. 1) of the housing 10 and a longitudinal direction (+Y-axis direction in FIG. 1) of the housing 1. Although in the example illustrated in FIG. 1, the plurality of secondary batteries 2 are disposed in twelve rows in the longitudinal direction of the housing 10, the arrangement shape of the plurality of the secondary batteries 2 may be changed to any of various shapes. The plurality of secondary batteries 2 may be disposed parallel to each other. The number of the secondary batteries 2 may be variously changed according to a size, the shape, and the like of the housing 10.

The plurality of secondary batteries 2 may be electrically connected to each other. As an example, adjacent secondary batteries 2 may be connected by a busbar 3 in series or parallel. The busbar 3 may be formed of an electrically conductive material such as copper, aluminum, or nickel. The specific shape of the busbar 3 may be changed to any of various shapes such that the adjacent secondary batteries 2 are electrically connected to each other.

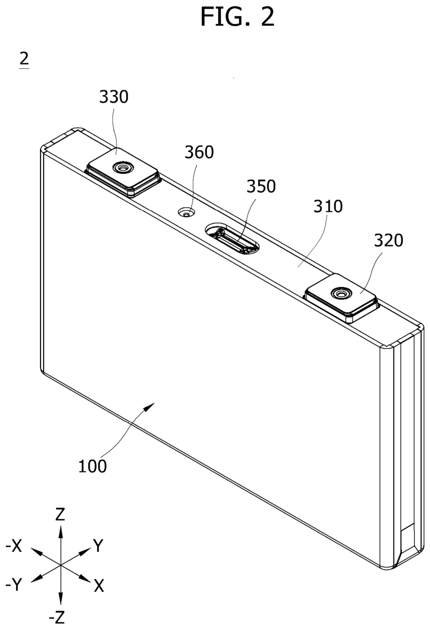

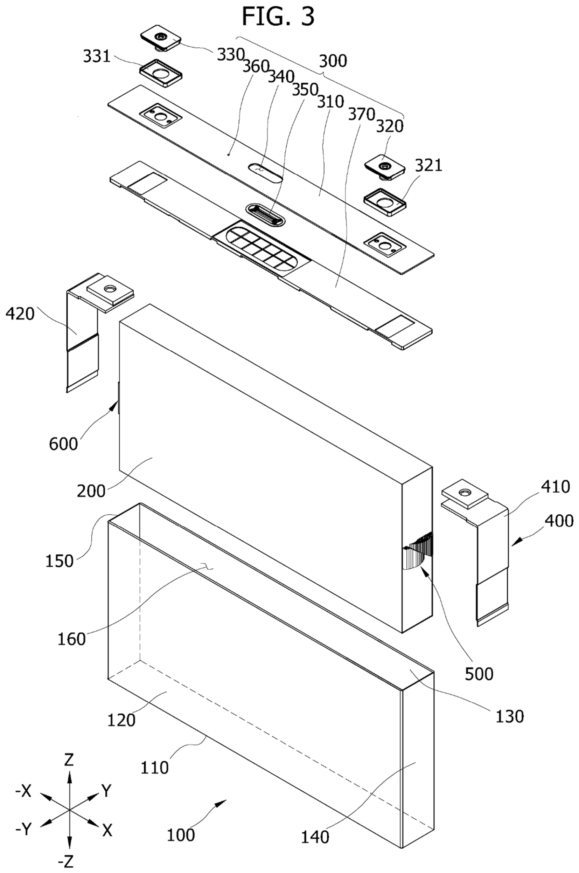

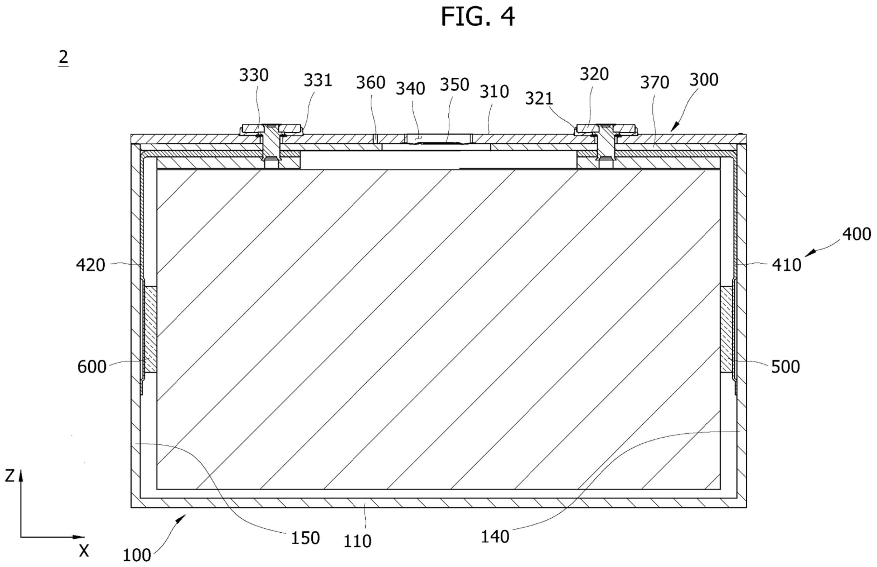

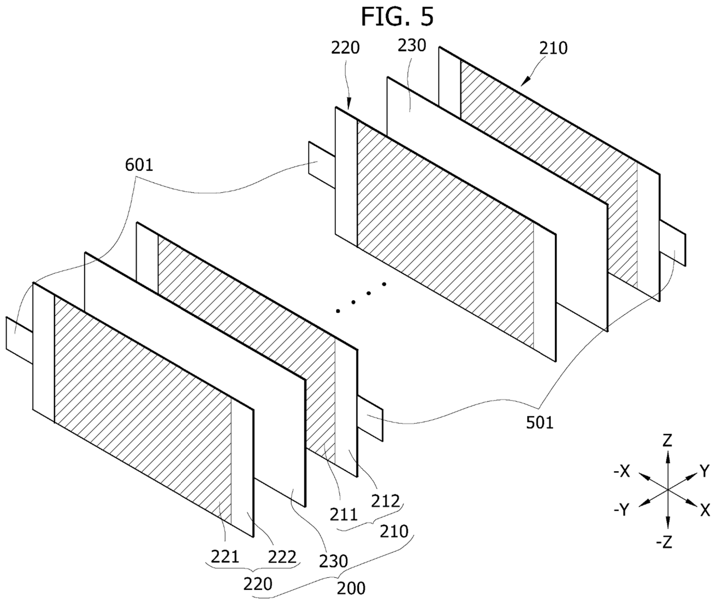

FIG. 2 is a schematic perspective view illustrating a configuration of a secondary battery 2 according to a first embodiment of the present disclosure, and FIG. 3 is a schematic exploded perspective view illustrating the configuration of the secondary battery 2 according to the first embodiment of the present disclosure. FIG. 4 is a schematic cross-sectional view illustrating the configuration of the secondary battery 2 according to the first embodiment of the present disclosure, and FIG. 5 is a view illustrating a configuration of an electrode assembly 200 according to the first embodiment of the present disclosure.

A first direction to be described below may be an X-axis direction in FIGS. 2 and 3, a second direction may be a Y-axis direction in FIGS. 2 and 3, and a third direction may be a Z-axis direction in FIGS. 2 and 3.

Hereinafter, an example of a lithium-ion secondary battery 2 will be described. However, the present disclosure is not limited thereto, and the secondary battery 2 may be a lithium polymer battery or cylindrical battery.

Referring to FIGS. 2 to 5, a secondary battery 2 according to the present embodiment may include a case 100, an electrode assembly 200, and a cap assembly 300 (see FIG. 4).

The case 100 may form the overall exterior of the secondary battery 2 and accommodate the electrode assembly 200.

The case 100 according to the present embodiment may include a bottom portion 110, a front portion 120, a rear portion 130, a first side portion 140, and a second side portion 150.

The bottom portion 110 may form a lower exterior of the case 100 (see FIG. 3). The bottom portion 110 according to the present embodiment may have a rectangular plate shape. The bottom portion 110 may be seated on a bottom surface of the housing body 11.

The front portion 120, the rear portion 130, the first side portion 140, and the second side portion 150 may form the exterior surface of the case 100.

Each of the front portion 120, the rear portion 130, the first side portion 140, and the second side portion 150 according to the present embodiment may have a plate shape extending upward from an edge of the bottom portion 110 (see FIG. 3). The front portion 120, the rear portion 130, the first side portion 140, and the second side portion 150 may be disposed to surround an upper surface and/or the space above the bottom portion 110. The front portion 120, the rear portion 130, the first side portion 140, and the second side portion 150 may be disposed to form a rectangular cross-sectional shape.

The front portion 120 and the rear portion 130 may be disposed to face each other in a longitudinal direction of the housing 10. The front portion 120 and the rear portion 130 may be disposed parallel to each other. The respective areas of the front portion 120 and the rear portion 130 may be the same.

The first side portion 140 and the second side portion 150 may be disposed to face each other in a width direction of the housing 10. The first side portion 140 and the second side portion 150 may be disposed parallel to each other. The respective areas of the first side portion 140 and the second side portion 150 may be the same. The areas of the first side portion 140 and the second side portion 150 may be smaller than the areas of the front portion 120 and the rear portion 130.

The case 100 may further include an opening 160. The opening 160 according to the present embodiment may be a space surrounded by upper end portions of the front portion 120, the rear portion 130, the first side portion 140, and the second side portion 150. The opening 160 may mutually connect an inner space and an outer space of the case 100.

Accordingly, the case 100 according to the present embodiment may have a rectangular hexahedral shape of which an upper side (e.g., "upper" in the orientation shown) is open.

The first direction to be described below may be parallel to an X-axis in FIGS. 3 and 4 and may be a direction from the second side portion 150 toward the first side portion 140. The second direction may be parallel to a Y-axis in FIGS. 3 and 4 and may be a direction from the front portion 120 toward the rear portion 130. The third direction may be parallel to a Z-axis in FIGS. 3 and 4 and may be a direction from the opening 160 toward the bottom portion 110.

The electrode assembly 200 may function as a unit structure which charges and discharges power in the secondary battery 2. The electrode assembly 200 may be accommodated in the case 100.

Referring to FIGS. 2 to 5, the electrode assembly 200 according to the present embodiment may include a first electrode plate 210 (see FIG. 5), a second electrode plate 220, and a separator 230 disposed between the first electrode plate 210 and the second electrode plate 220. As illustrated in FIG. 5, the electrode assembly 200 may comprise a plurality of the first electrode plates 210, a plurality of the separators 230, and a plurality of the second electrode plates 220, respectively.

The first electrode plates 210 may function as any one of a positive electrode or negative electrode of the electrode assembly 200. Hereinafter, an example in which the first electrode plates 210 are the positive electrode of the electrode assembly 200 will be described. However, the first electrode plates 210 may function as the negative electrode of the electrode assembly 200.

The first electrode plates 210 according to the present embodiment may be formed as, or take the form of, a foil including a metal material such as aluminum or an aluminum alloy. The type, size, and shape of the first electrode plates 210 may vary as long as the first electrode plates 210 have conductivity without causing a chemical change of the secondary battery 2. The cross-sectional shape of the first electrode plates 210 may be changed to any of various shapes other than the rectangular shape illustrated in FIG. 5.

The plurality of first electrode plates 210 may be disposed between the front portion 120 and the rear portion 130 of the case 100 in the second direction. The number of the first electrode plates 210 may be variously changed according to a charging capacity of the secondary battery 2 or the like.

At least a portion of the first electrode plates 210 may be coated with a first active material layer 211. Both surfaces of the first electrode plate 210 may be coated with the first active material layer 211. In other embodiments, only one surface of the first electrode plate 210 may be coated with the first active material layer 211. In the present embodiment, as the first electrode plate 210 functions as the positive electrode, the first active material layer 211 may include a positive electrode active material.

The positive electrode active material may be a compound capable of reversible intercalation and deintercalation of lithium (a lithiated intercalation compound). More specifically, as the positive electrode active material, one or more of composite oxides of a metal selected from cobalt, manganese, nickel, iron, and a combination thereof and lithium may be used.

As an example, the positive electrode active material may include at least one of lithium-iron-phosphorus oxide (LiFePO4, LFP), lithium-manganese-iron-phosphorus oxide (LiMnFePO4, LMFP), and lithium-nickel-cobalt-manganese oxide (LiNixCo_{y}Mn_{z}O₂, NCM). Here, 0 < x < 1, 0 < y <1, 0 < z < 1, and x+y+z = 1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 211 may further include a positive electrode conductive material.

The positive electrode conductive material is used to impart conductivity to the first active material layer 211, and any electronically conductive material that does not cause a chemical change may be used. Examples of the positive electrode conductive material may include carbon materials such as natural graphite, artificial graphite, carbon black, acetylene black, Ketjen black, carbon fibers, carbon nanofibers, and carbon nanotubes, metal materials in the form of a metal powder or metal fibers containing copper, nickel, aluminum, silver, and the like, conductive polymers such as polyphenylene derivatives, or a mixture thereof.

The first active material layer 211 may further include a positive electrode binder.

The positive electrode binder serves to attach the particles constituting the positive electrode active material to each other well, and also attach the positive electrode active material to the first electrode plate 210 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode plate 210 may include a first non-coated portion 212 which is not coated with the first active material layer 211. The first non-coated portion 212 according to the present embodiment may be disposed in a region of one end portion of the first electrode plate 210, e.g. which in use is disposed toward the first side portion 140 of the case 100. However, a shape of the first non-coated portion 212 may be formed on an entire edge region of the first electrode plate 210 (e.g., each of the four edges of the first electrode plate 210).

The second electrode plates 220 may function as the other of the positive electrode or the negative electrode of the electrode assembly 200. Hereinafter, an example in which the second electrode plates 220 are the negative electrode of the electrode assembly 200 will be described. However, the second electrode plates 220 may function as the positive electrode of the electrode assembly 200.

The plurality of second electrode plates 220 may be disposed between the front portion 120 and the rear portion 130 of the case 100 in the second direction. The first electrode plate 210 and the second electrode plate 220 may be alternately disposed in the second direction. The second electrode plate 220 may be spaced a predetermined distance from the first electrode plate 210 in the second direction.

The second electrode plate 220 according to the present embodiment may be formed as, or in the form of, a foil including a metal material such as copper, a copper alloy, nickel, or a nickel alloy. The type, size, and shape of the second electrode plate 220 may vary, as long as the second electrode plate 220 has conductivity without causing a chemical change of the secondary battery. A cross-sectional shape of the second electrode plate 220 may be changed to any of various shapes other than the rectangular shape illustrated in FIG. 5.

At least a portion of the second electrode plates 220 may be coated with a second active material layer 221. Both surfaces of the second electrode plate 220 may be coated with the second active material layer 221. Alternatively, only one surface of the second electrode plate 220 may be coated with the second active material layer 221.

As the second electrode plate 220 functions as the negative electrode, the second active material layer 221 may include a negative electrode active material.

The negative electrode conductive material is used to impart conductivity to the second active material layer 221, and any electronically conductive material that does not cause a chemical change may be used. Examples of the negative electrode conductive material may include carbon materials such as natural graphite, artificial graphite, carbon black, acetylene black, Ketjen black, carbon fibers, carbon nanofibers, and carbon nanotubes, metal materials in the form of a metal powder or metal fibers containing copper, nickel, aluminum, silver, or the like, conductive polymers such as polyphenylene derivatives, or a mixture thereof.

The negative electrode binder serves to well attach particles constituting the negative electrode active material and also serves to well attach the negative electrode active material to the second electrode plate 220.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, the aqueous binder may further include a cellulose series compound capable of giving viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode plate 220 may include a second non-coated portion 222 which is not coated with the second active material layer 221. The second non-coated portion 222 according to the present embodiment may be disposed in a region of the other end portion of the second electrode plate 220, e.g. which in use is disposed toward the second side portion 150 of the case 100. However, a shape of the second non-coated portion 222 may alternatively be formed on an entire edge region (e.g., a periphery) of the second electrode plate 220.

The separators 230 may be disposed between the respective first electrode plates 210 and the second electrode plates 220. The separators 230 may allow lithium ions to move between the respective first electrode plates 210 and the second electrode plates 220 and prevent a short circuit between the first electrode plates 210 and the second electrode plates 220.

The separators 230 may be disposed to entirely surround a surface region of the electrode assembly 200. Accordingly, the separator 230 may prevent the first electrode plates 210 and the second electrode plates 220 from being directly exposed to the outside of the electrode assembly 200.

The separators 230 may be made of polyethylene, polypropylene, polyvinylidene fluoride, or a multilayer film of two or more layers thereof , and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separators 230 may include a porous substrate and a coating layer including an organic material, an inorganic material, or a combination thereof, which is positioned on one surface or both surfaces of the porous substrate.

The porous substrate may be a polymer film made of one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more of the above materials.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y2O₃, SrTiO₃, BaTiO₃, Mg(OH)₂, boehmite, and a combination thereof, but may vary.

The organic material and the inorganic material may be mixed in one coating layer or may be in the form of a coating layer including (or containing) an organic material and a coating layer including (or containing) an inorganic material which are stacked on each other.

A first electrode tab 500 (see FIG. 4) may be formed on the first electrode plate 210. The first electrode tab 500 may be connected to the first electrode plate 210. As the first electrode plate 210 is, in this example, the positive electrode, the first electrode tab 500 may function as a positive electrode tab of the secondary battery 2. However, when the first electrode plate 210 is the negative electrode, the first electrode tab 500 may function as a negative electrode tab of the secondary battery 2.

The first electrode tab 500 may extend from the electrode assembly 200 in the first direction. As an example, the first electrode tab 500 may extend from the electrode assembly 200 toward the first side portion 140 in the case 100.

The first electrode tab 500 according to the present embodiment may include a plurality of first electrode tabs 501 (see FIG. 5).

Each of the plurality of first electrode tabs 501 according to the present embodiment may have the form of a foil extending from the first non-coated portion 212 of the first electrode plate 210 in the first direction. Each of the plurality of first electrode tabs 501 may have a substantially rectangular shape. However, the shape of the plurality of first electrode tabs 501 may be changed to any of various shapes.

Each of the plurality of first electrode tabs 501 may be integrally formed with their respective first electrode plate 210. For example, each of the plurality of first electrode tabs 501 may be a region of the first non-coated portion 212 which remains after a portion of a region of the first non-coated portion 212 is cut or removed by a notching process or the like. In other embodiments, the plurality of first electrode tabs 501 may be manufactured separately from their respective first electrode plate 210 and then connected to the first non-coated portion 212 by welding or the like. A material of the plurality of first electrode tabs 501 may be the same as the material of the first electrode plates 210.

The number of first electrode tabs 501 may be the same as the number of the first electrode plates 210. Each of the plurality of first electrode tabs 501 may individually extend from one of the first non-coated portions 212 of the different first electrode plates 210. Adjacent first electrode tabs 501 may be disposed to face each other in the second direction. That is, the plurality of first electrode tabs 501 may be disposed in the second direction. Adjacent first electrode tabs 501 may be disposed parallel to each other. Accordingly, the first electrode tab 500 according to the present embodiment may be an assembly of the plurality of first electrode tabs 501 disposed in the second direction.

The secondary battery 2 according to the present embodiment may further include a second electrode tab 600.

The second electrode tab 600 may be connected to the second electrode plate 220. As the second electrode plate 220 is, in this example, the negative electrode, the second electrode tab 600 may function as the negative electrode tab of the secondary battery 2. However, when the second electrode plate 220 is the positive electrode, the second electrode tab 600 may function as the positive electrode tab of the secondary battery 2.

The second electrode tab 600 may extend from the electrode assembly 200 in a direction opposite to the first direction. As an example, the second electrode tab 600 may extend from the electrode assembly 200 toward the second side portion 150 in the case 100. That is, the first electrode tab 500 and the second electrode tab 600 may extend from the electrode assembly 200 in opposite directions.

The second electrode tab 600 according to the present embodiment may include a plurality of second electrode tabs 601 (see FIG. 5).

Each of the plurality of second electrode tabs 601 according to the present embodiment may have the form of a foil extending from the second non-coated portion 222 of the second electrode plate 220 in the direction opposite to the first direction. The plurality of second electrode tabs 601 may have a substantially rectangular shape. However, the shape of the plurality of second electrode tabs 601 may be changed to any of various shapes.

The plurality of second electrode tabs 601 may be integrally formed with the second electrode plate 220. For example, the plurality of second electrode tabs 601 may be a region of the second non-coated portion 222 remaining after a region of a portion of the second non-coated portion 222 is cut or removed by a notching process or the like. In other embodiments, the plurality of second electrode tabs 601 may be manufactured separately from the second electrode plate 220 and then connected to the second non-coated portion 222 by welding or the like. A material of the plurality of second electrode tabs 601 may be the same as the material of the second electrode plate 220.

The number of second electrode tabs 601 may be the same as the number of second electrode plates 220. Each of the plurality of second electrode tabs 601 may individually extend from one of the second non-coated portions 222 of the different second electrode plates 220. Adjacent second electrode tabs 601 may be disposed to face each other in the second direction. That is, the plurality of second electrode tabs 601 may be disposed in the second direction. The adjacent second electrode tabs 601 may be disposed parallel to each other. Accordingly, the second electrode tab 600 according to the present embodiment may be an assembly of the plurality of second electrode tabs 601 disposed in the second direction.

The cap assembly 300 may be coupled to the case 100 and seal the case 100. The cap assembly 300 may be disposed to face the electrode assembly 200 in the third direction.

The cap assembly 300 according to the present embodiment may include a cap plate 310, a first terminal 320, and a second terminal 330.

The cap plate 310 may form an overall exterior of the cap assembly 300 and support the first terminal 320 and the second terminal 330 as a whole.

The cap plate 310 according to the present embodiment may be formed in a flat plate shape. The cap plate 310 may be disposed on the opening 160 of the case 100. The cap plate 310 may be disposed to face the electrode assembly 200 in the third direction. That is, the cap plate 310 may be disposed at a location spaced a predetermined distance from the electrode assembly 200 in the third direction. The cap plate 310 may be disposed parallel to the bottom portion 110 of the case 100.

The cap plate 310 may be seated on an upper end portion of the case 100, more specifically, the upper end portions of the front portion 120, the rear portion 130, the first side portion 140, and the second side portion 150. The cap plate 310 may be coupled to the case 100 by any of various coupling methods such as welding, bolting, and fitting.

The first terminal 320 may protrude outward from the cap plate 310. The first terminal 320 may be electrically connected to the first electrode plate 210. As the first electrode plate 210 according to the present embodiment functions as the positive electrode, the first terminal 320 may be, in this example, a positive electrode terminal of the secondary battery 2.

The first terminal 320 according to the present embodiment may be inserted into the cap plate 310. An upper end portion of the first terminal 320 may protrude from the cap plate 310 in the first direction. Although an example of the first terminal 320 having a quadrangular cross-sectional shape is illustrated in FIG. 3, the cross-sectional shape of the first terminal 320 may be changed to any of various shapes such as a circular shape, an elliptical shape, and a polygonal shape. The first terminal 320 may be formed of an electrically conductive material such as aluminum, nickel, or copper.

A first gasket 321 may be installed between the cap plate 310 and the first terminal 320. The first gasket 321 may electrically insulate the cap plate 310 from the first terminal 320 and prevent moisture or foreign matter from being introduced through a gap between the cap plate 310 and the first terminal 320.

The first gasket 321 according to the present embodiment may be formed of an insulating material such as polyethylene (PE), polypropylene (PP), polyethylene terephthalate (PET), or rubber. The first gasket 321 may be fixed between the cap plate 310 and the first terminal 320 by press fitting, injecting, bonding, or the like.

The second terminal 330 may protrude outward from the cap plate 310 at a location spaced apart from the first terminal 320. The second terminal 330 may be electrically connected to the second electrode plate 220. As the second electrode plate 220 according to the present embodiment functions as the negative electrode, the second terminal 330 may be, in this example, a negative electrode terminal of the secondary battery 2.

The second terminal 330 according to the present embodiment may be inserted into the cap plate 310. An upper end portion of the second terminal 330 may protrude from the cap plate 310 in the first direction. Although an example of the second terminal 330 having a quadrangular cross-sectional shape is illustrated in FIG. 3, the cross-sectional shape of the second terminal 330 may be changed to any of various shapes such as a circular shape, an elliptical shape, and a polygonal shape. The second terminal 330 may be formed of an electrically conductive material such as aluminum, nickel, or copper. The second terminal 330 may be disposed at the location spaced a predetermined distance from the first terminal 320 in the direction opposite to the first direction.

A second gasket 331 may be installed between the cap plate 310 and the second terminal 330. The second gasket 331 may electrically insulate the cap plate 310 from the second terminal 330 and prevent moisture or foreign matter from being introduced through a gap between the cap plate 310 and the second terminal 330.

The second gasket 331 according to the present embodiment may be formed of an insulating material such as PE, PP, PET, or rubber. The second gasket 331 may be fixed between the cap plate 310 and the second terminal 330 by press fitting, injecting, bonding, or the like.

The cap assembly 300 according to the present embodiment may further include a vent hole 340 and a vent 350.

The vent hole 340 according to the present embodiment may be formed in a hole shape (e.g., an oval shape) vertically passing through both surfaces of the cap plate 310 in the third direction. The vent hole 340 may function as a portion providing a path through which flames, gas, smoke, and the like generated in the case 100 when a thermal runaway occurs due to an overcurrent or the like in the secondary batteries 2 are discharged to the outside of the case 100. The vent hole 340 may be disposed between the first terminal 320 and the second terminal 330. A cross-sectional shape of the vent hole 340 may be changed to any of various shapes such as an elliptical shape, a circular shape, and a polygonal shape.

The vent 350 may be installed in the vent hole 340 and opened or closed in conjunction with a change in internal pressure of the case 100. That is, when the secondary battery 2 operates normally, the vent 350 may close the vent hole 340 to block an electrolyte, etc., in the case 100 from leaking to the outside of the case 100 or block moisture, foreign matter, etc., from being introduced into the case 100. When a thermal runaway of the secondary battery 2 occurs, the vent 350 may open the vent hole 340 to guide flames, gas, smoke, etc., generated in the case 100 to be discharged to the outside.

The vent 350 according to the present embodiment may be formed to have substantially a plate shape. The vent 350 may be fixed to the cap plate 310 by any of various coupling methods such as welding, bolting, and fitting. The vent 350 may be disposed in the vent hole 340, or disposed to face the vent hole 340 in the third direction at an upper side or lower side of the cap plate 310.

A thickness of the vent 350 may be smaller than a thickness of the cap plate 310 in the third direction. Accordingly, the vent 350 may be easily burst or ruptured when an internal pressure of the case 100 increases. The vent 350 may include a notch formed to be concave inward from the vent 350 to be ruptured first when the internal pressure of the case 100 increases.

The cap assembly 300 according to the present embodiment may further include an electrolyte injection hole 360 which is formed to pass through the cap plate 310 and in which a sealing stopper may be installed. The electrolyte injection hole 360 may be spaced a predetermined distance from the vent hole 340 in the first direction or the direction opposite to the first direction. The electrolyte injection hole 360 may be disposed between the first terminal 320 and the second terminal 330.

The cap assembly 300 according to the present embodiment may further include an insulating plate 370.

The insulating plate 370 may be disposed between the cap plate 310 and the electrode assembly 200. The insulating plate 370 may prevent direct contact between the cap plate 310 and the electrode assembly 200 to insulate the cap plate 310 from the electrode assembly 200. The insulating plate 370 may fix a location of the electrode assembly 200 in the case 100. The insulating plate 370 may prevent the electrode assembly 200 from being damaged when the cap plate 310 is deformed inward from the case 100 due to an external impact, etc.

The insulating plate 370 according to the present embodiment may be disposed to face the electrode assembly 200 in the third direction in the case 100. That is, the cap plate 310, the insulating plate 370, and the electrode assembly 200 may be sequentially disposed in the third direction. The insulating plate 370 may be fixed to an inner surface of the case 100 by any of various coupling methods such as press fitting, welding, bolting, and bonding. The insulating plate 370 may be in contact with one surface of the electrode assembly 200 disposed toward the opening 160. The insulating plate 370 may be formed of an insulating material such as PE, PP, PET, or rubber.

The cap assembly 300 may include a sub-plate 400. The sub-plate 400 may include a first sub-plate 410 connected to the first electrode tab 500 and a second sub-plate 420 connected to the second electrode tab 600.

The first sub-plate 410 may be disposed between the electrode assembly 200 and the case 100. The first sub-plate 410 may be connected to the first electrode tab 500. The first sub-plate 410 may function as a part which restricts relative movement of the plurality of first electrode tabs 501 constituting the first electrode tab 500 and electrically connects the first electrode tab 500 and the first terminal 320.

The first sub-plate 410 may be formed in substantially a flat plate shape. The shape of the first sub-plate 410 may be changed to any of various shapes such as a circular shape, an elliptical shape, and a polygonal shape other than a quadrangular shape.

The second sub-plate 420 may be disposed between the electrode assembly 200 and the case 100. The second sub-plate 420 may be connected to the second electrode tab 600. The second sub-plate 420 may function as a part which restricts relative movement of the plurality of second electrode tabs 601 constituting the second electrode tab 600 and electrically connects the second electrode tab 600 and the second terminal 330.

The second sub-plate 420 may be formed in substantially a flat plate shape. The shape of the second sub-plate 420 may be changed to any of various shapes such as a circular shape, an elliptical shape, and a polygonal shape other than a quadrangular shape.

Each of the first sub-plate 410 and the second sub-plate 420 may be formed of an electrically conductive material such as aluminum, copper, or nickel.

In addition, the first sub-plate 410 and the first electrode tab 500, and the second sub-plate 420 and the second electrode tab 600 may be bonded to each other by laser welding.

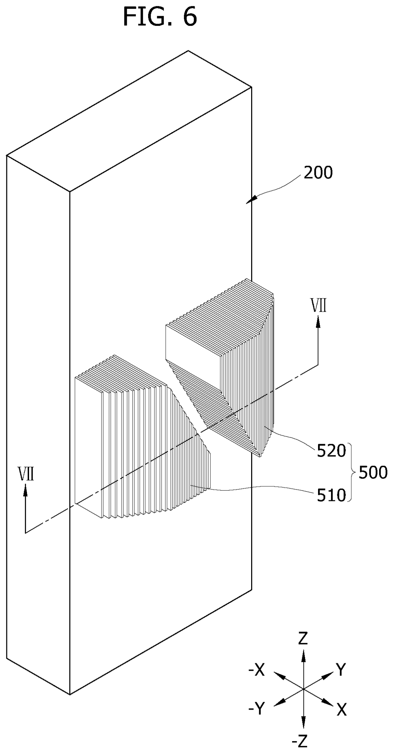

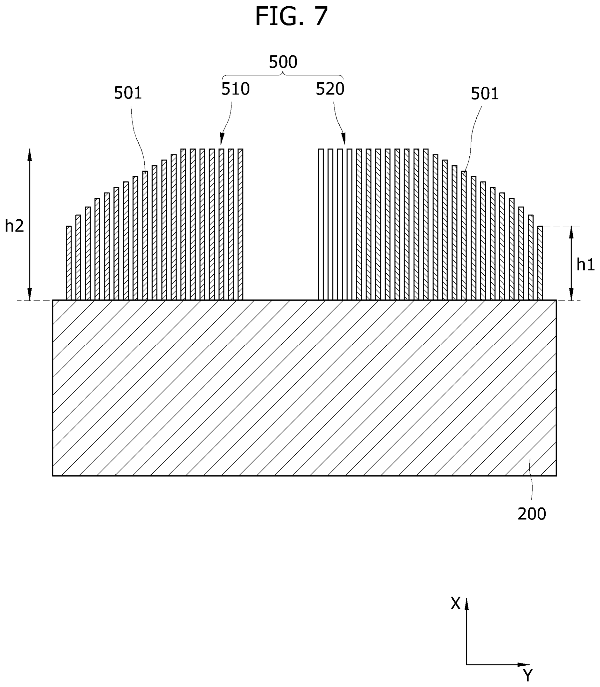

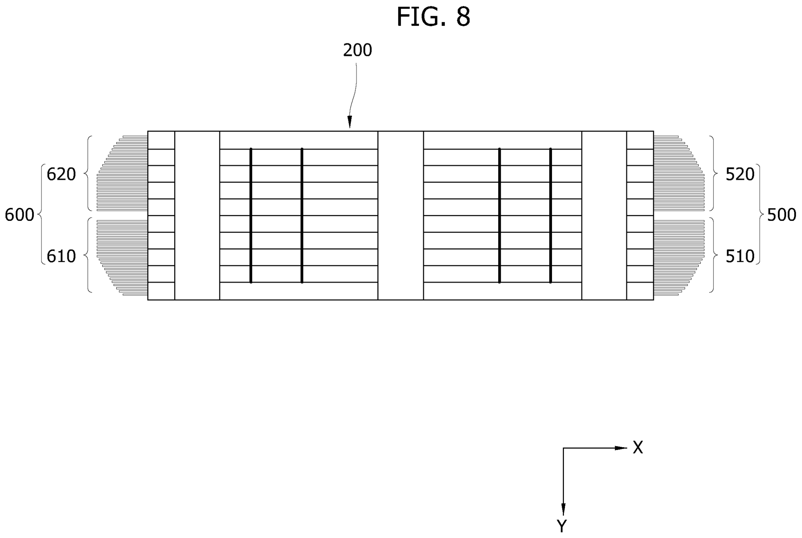

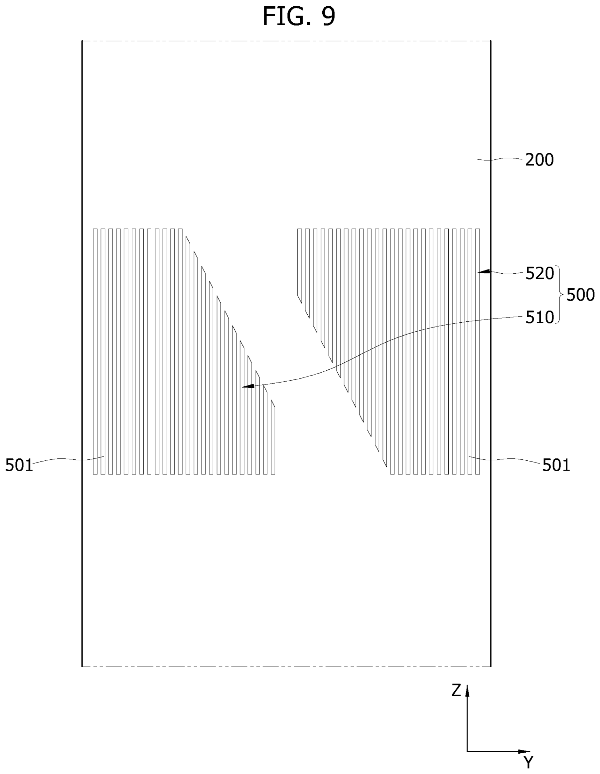

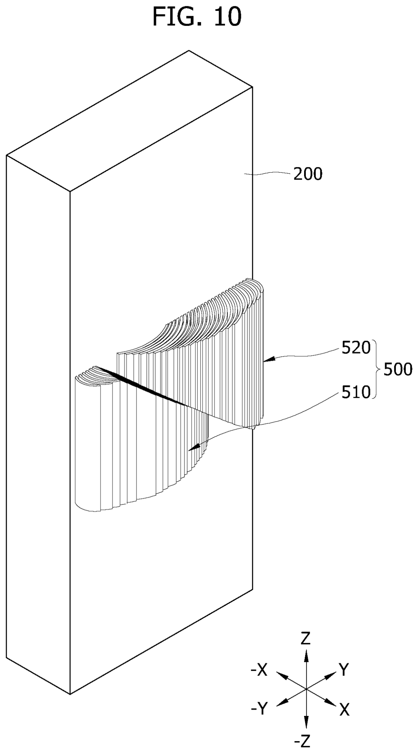

FIG. 6 is a schematic perspective view illustrating the first electrode tab 500 of the electrode assembly 200 according to the first embodiment of the present disclosure, and FIG. 7 is a cross-sectional view along line VII-VII of FIG. 6. FIG. 8 is a schematic plan view illustrating an electrode tab 500 of the electrode assembly 200 according to the first embodiment of the present disclosure, and FIG. 9 is a schematic side view illustrating the first electrode tab 500 of the electrode assembly 200 according to the first embodiment of the present disclosure. FIG. 10 is a view illustrating a bent state of the first electrode tab 500 of the electrode assembly 200 according to the first embodiment of the present disclosure.

The first electrode tab 500 may include first inner electrode tabs 510 connected to some of the first electrode plates 210 of the plurality of first electrode plates 210 and first outer electrode tabs 520 connected to others (e.g., a remainder) of the first electrode plates 210 of the plurality of first electrode plates 210 and spaced apart from the first inner electrode tabs 510.

The first inner electrode tabs 510 may be formed as an assembly of the plurality of first electrode tabs 501 located in a direction opposite to the second direction with respect to a center of a side surface of the electrode assembly 200, and the first outer electrode tabs 520 may be formed as an assembly of the plurality of first electrode tabs 501 located in the second direction based on the side surface of the electrode assembly 200. For example, referring to FIG. 7, the assembly of the first inner electrode tabs 510 may be spaced apart from the assembly of the first outer electrode tabs 520 (e.g., along the Y-axis direction).

The first inner electrode tabs 510 and the first outer electrode tabs 520 may extend from the first electrode plates 210 in the first direction, and the first inner electrode tabs 510 and the first outer electrode tabs 520 may be disposed to face each other in the second direction intersecting the first direction.

A length of the first inner electrode tabs 510 in the first direction may increase in the second direction, and a length of the first outer electrode tab 520 in the first direction may increase in the direction opposite to the second direction.

In this case, the length of the first inner electrode tabs 510 in the first direction and the length of the first outer electrode tabs 520 in the first direction may range from 6 mm to 12 mm.

A shortest length h1 may be 6 mm, and a longest length h2 may be 12 mm.

That is, as illustrated in FIG. 7, the length of the first inner electrode tabs 510 may gradually increase inward from an outermost side (e.g., along the Y-axis direction), and the length of the first outer electrode tab 520 may gradually increase inward from an outermost side (e.g., in the direction opposite the Y-axis direction).

A width of the first inner electrode tabs 510 in the third direction decreases in the second direction, a width of the first outer electrode tabs 520 in the third direction decreases in the direction opposite to the second direction, and the third direction is a direction intersecting the first direction and the second direction.

The first inner electrode tabs 510 and the first outer electrode tabs 520 may be point-symmetric with each other. That is, the first inner electrode tabs 510 and the first outer electrode tabs 520 may be formed in right triangular shapes which are point-symmetric with each other.

The first inner electrode tabs 510 may be bent in the second direction, and the first outer electrode tabs 520 may be bent in the direction opposite to the second direction.

In this case, the first inner electrode tabs 510 do not overlap the first outer electrode tabs 520 in the first direction.

More specifically, the first inner electrode tabs 510 and the first outer electrode tabs 520 may form boundary surfaces which are parallel to face each other, and the boundary surfaces are inclined as illustrated in the drawings. In addition, when each of the first inner electrode tabs 510 and the first outer electrode tabs 520 are bent, the plurality of first electrode tabs 501 of the first inner electrode tabs 510 are bent in the second direction, the plurality of first electrode tabs 501 of the first outer electrode tabs 520 are bent in the direction opposite to the second direction, and inner sides thereof may be disposed to be spaced apart from each other without overlapping each other.

In this case, since a length of the plurality of first electrode tabs 501 of the first inner electrode tab 510 in the first direction increases in the second direction, an end portion of the plurality of first electrode tabs 501 thereof may be exposed, and since a length of the plurality of first electrode tabs 501 of the first outer electrode tabs 520 in the first direction increases in the direction opposite to the second direction, an end portion of the plurality of first electrode tabs 501 thereof may be exposed. Accordingly, since all the plurality of first electrode tabs 501 of the first inner electrode tabs 510 and the first outer electrode tabs 520 may be in direct contact with the first sub-plate 410, the plurality of first electrode tabs 501 may be prevented from not being welded to the first sub-plate 410.

In addition, an overlapping amount of the plurality of first electrode tabs 501 may be minimized to improve welding efficiency and even solidity.

The second electrode tab 600 may include second inner electrode tabs 610 connected to some of the second electrode plates 220 of the plurality of the second electrode plate 220 and second outer electrode tabs 620 connected to others (e.g., a remainder) of the second electrode plates 220 of the plurality of the second electrode plate 220 and spaced apart from the second inner electrode tabs 610.

Since the second inner electrode tabs 610 and the second outer electrode tabs 620 of the second electrode tab 600 have the same structure as the first inner electrode tabs 510 and the first outer electrode tabs 520 of the first electrode tab 500, detailed description thereof will be substituted by the above description.

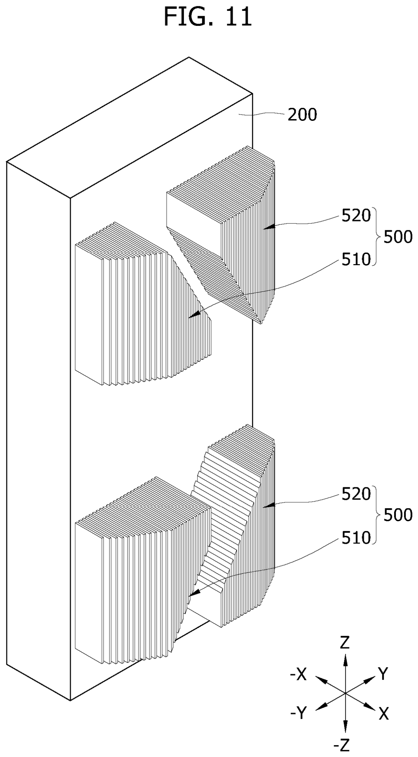

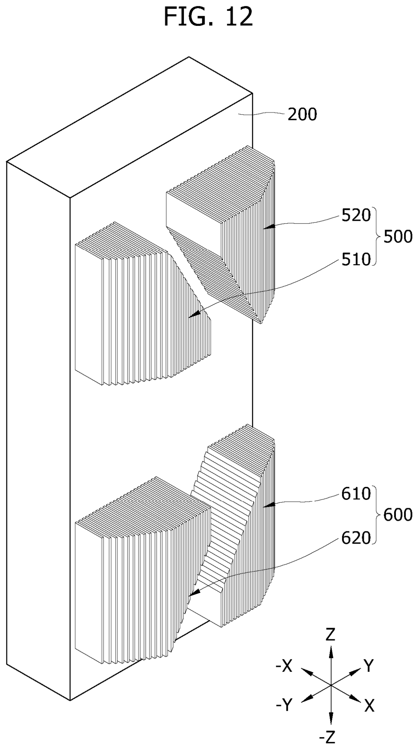

FIG. 11 is a schematic perspective view illustrating a modified example of the first electrode tab 500 of the electrode assembly 200 according to the present disclosure, and FIG. 12 is a schematic perspective view illustrating the modified example of the electrode tab 500 of the electrode assembly 200 illustrated in FIG. 11.

Referring to FIG. 11, a plurality of the first electrode tab 500s may be provided. The the first electrode tabs 500 may be disposed in a third direction. As an example, the plurality of the first electrode tabs 500 according to the present embodiment may be provided as a pair of first electrode tabs 500 which may be disposed to be spaced a predetermined distance from each other in the third direction.

A plurality of second electrode tabs 600 may be provided. The plurality of second electrode tabs 600 may be disposed in the third direction. Like the first electrode tabs 500, the second electrode tabs 600 according to the present embodiment may be provided as a pair of the second electrode tabs 600 which may be disposed to be spaced apart from each other in the third direction.

Referring to FIG. 12, the plurality of first electrode tabs 500 and the plurality of second electrode tabs 600 may extend from the electrode assembly 200 in a first direction. That is, the plurality of first electrode tabs 500 and the plurality of second electrode tabs 600 may extend in the same direction and may be disposed to be spaced a predetermined distance from each other in a third direction.

Hereinafter, an electrode assembly 200 according to a second embodiment of the present disclosure will be described.

The electrode assembly 200 according to the present embodiment may be formed such that only specific components are different from those of the electrode tab according to the first embodiment of the present disclosure.

Accordingly, in description of the electrode assembly 200 according to the present embodiment, only the specific components of the electrode tab which are different from those of the electrode assembly 200 according to the first embodiment of the present disclosure will be described.

The description of the electrode assembly 200 according to the first embodiment of the present disclosure may be applied to the other components of the electrode assembly 200 according to the present embodiment without change.

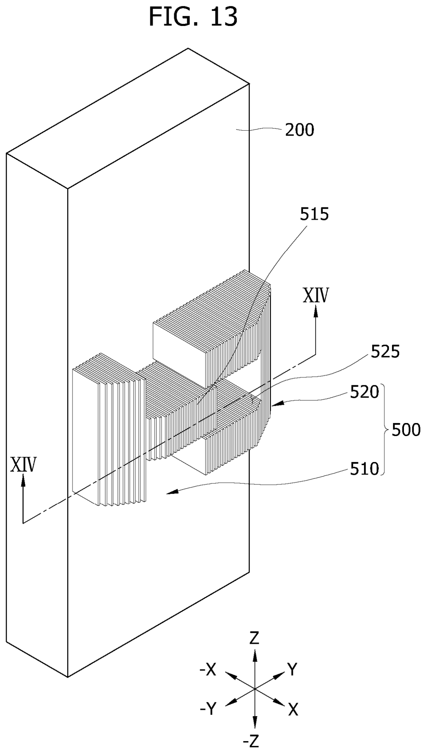

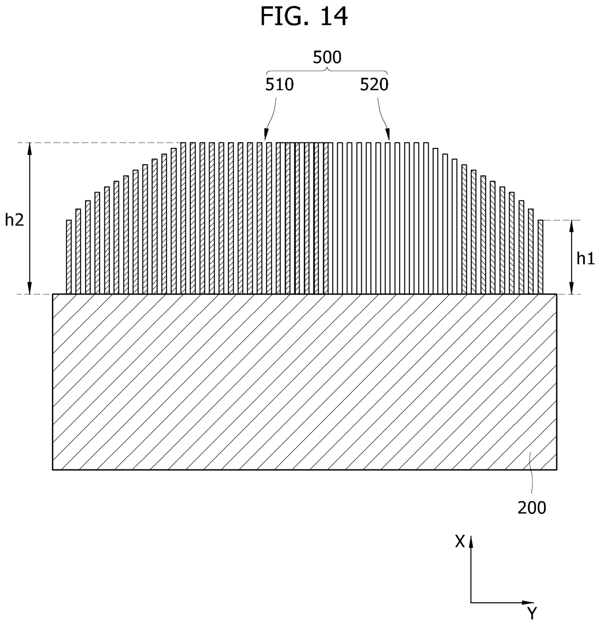

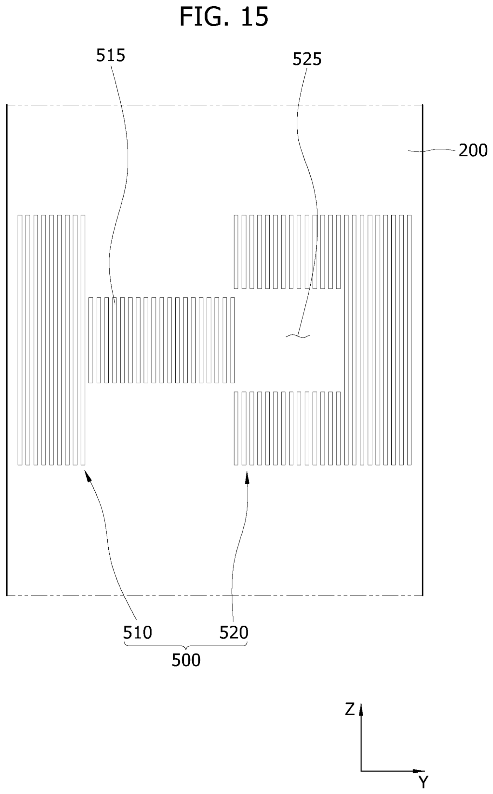

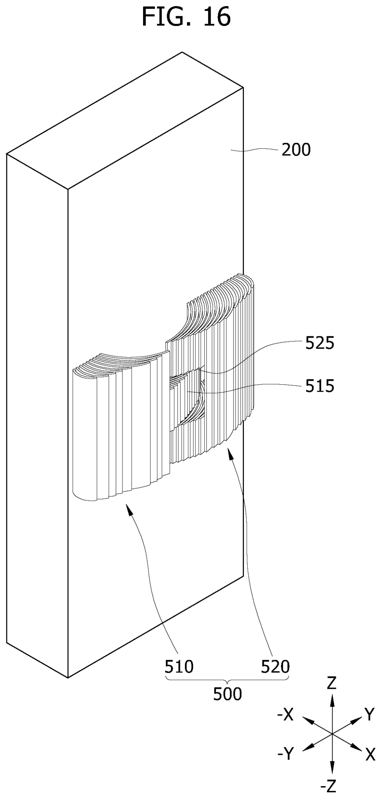

FIG. 13 is a schematic perspective view illustrating a first electrode tab 500 of an electrode assembly 200 according to the second embodiment of the present disclosure, and FIG. 14 is a cross-sectional view along line XIV-XIV of FIG. 13. FIG. 15 is a schematic side view illustrating the first electrode tab 500 of the electrode assembly 200 according to the second embodiment of the present disclosure, and FIG. 16 is a view illustrating a bent state of the first electrode tab 500 of the electrode assembly 200 according to the second embodiment of the present disclosure.

Referring to FIGS. 13 to 16, the first electrode tab 500 may include first inner electrode tabs 510 connected to some of first electrode plates 210 of a plurality of first electrode plates 210 and first outer electrode tabs 520 connected to others of the first electrode plates 210 of the plurality of first electrode plates 210 and spaced apart from the first inner electrode tabs 510.

The first inner electrode tabs 510 may be formed as an assembly of a plurality of first electrode tabs 501 located in a direction opposite to a second direction with respect to a center of a side surface of an electrode assembly 200, and the first outer electrode tabs 520 may be formed as an assembly of plurality of first electrode tabs 501 located in the second direction with respect to the center of the side surface of the electrode assembly 200.

The first inner electrode tabs 510 and the first outer electrode tabs 520 may extend from a first electrode plate 210 in a first direction, and the first inner electrode tabs 510 and the first outer electrode tabs 520 may be disposed to face each other in the second direction intersecting the first direction.

A length of the first inner electrode tabs 510 in the first direction may increase in the second direction, and a length of the first outer electrode tabs 520 in the first direction may increase in the direction opposite to the second direction.

In this case, the length of the first inner electrode tabs 510 in the first direction and the length of the first outer electrode tabs 520 in the first direction may range from 6 mm to 12 mm.

That is, as illustrated in FIG. 14, the length of the first inner electrode tabs 510 may gradually increase inward from an outermost side, and the length of the first outer electrode tabs 520 may gradually increase inward from an outermost side.

The first inner electrode tabs 510 may include a convex portion 515 formed to be convex from one surface of the first inner electrode tabs 510 facing the first outer electrode tabs 520, and the first outer electrode tabs 520 may include a concave portion 525 formed to be concave from one surface of the first outer electrode tabs 520 facing the first inner electrode tabs 510 to accommodate the convex portion 515.

The convex portion 515 and the concave portion 525 may be disposed to face each other in the second direction. However, locations of the convex portions 515 and the concave portions 525 may be interchanged. That is, the concave portion may be formed in the first inner electrode tabs 510, and the convex portion may be formed in the first outer electrode tabs 520.

The first inner electrode tabs 510 may be bent in the second direction, and the first outer electrode tabs 520 may be bent in the direction opposite to the second direction.

In this case, the first inner electrode tabs 510 do not overlap the first outer electrode tabs 520 in the first direction.

More specifically, the convex portion 515 and the concave portion 525 corresponding to each other may be formed on the first inner electrode tabs 510 and the first outer electrode tabs 520, respectively, and when the first inner electrode tabs 510 and the first outer electrode tabs 520 are bent, the plurality of first electrode tabs 501 of the first inner electrode tabs 510 may be bent in the second direction, and the plurality of first electrode tabs 501 of the first outer electrode tabs 520 may be bent in the direction opposite to the second direction such that the convex portion 515 is inserted into the concave portion 525 and inner sides thereof may be disposed to be spaced apart from each other without overlapping each other.

In this case, since a length of the plurality of first electrode tabs 501 of the first inner electrode tabs 510 in the first direction increases in the second direction, an end portion of the plurality of first electrode tabs 501 thereof may be exposed, and since a length of the plurality of first electrode tabs 501 of the first outer electrode tabs 520 in the first direction increases in the direction opposite to the second direction, an end portion of the plurality of first electrode tabs 501 thereof may be exposed. Accordingly, since all the plurality of first electrode tabs 501 of the first inner electrode tabs 510 and the first outer electrode tabs 520 may be in direct contact with a first sub-plate 410, the plurality of first electrode tabs 501 may be prevented from not being welded to the first sub-plate 410,

In addition, an overlapping amount of the plurality of first electrode tabs 501 may be minimized to improve welding efficiency and even solidity.

The present disclosure is directed to providing an electrode assembly and a secondary battery in which a length of an electrode tab is controlled to be optimally designed and an overlapping amount of electrode tabs is minimized to easily perform laser welding and minimize foreign matter generated during the laser welding.

According to the present disclosure, since an overlapping amount of electrode tabs is minimized, laser welding can be easily performed, and foreign matter generated during the laser welding can be minimized.

According to the present disclosure, since electrode tabs are divided into an inner electrode tab and an outer electrode tab which face each other, and all the electrode tabs have structures which are bent toward each other and welded while in direct contact with a current collecting member, the reliability of electrical connection can be improved.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode assembly, comprising:
a plurality of first electrode plates;
a plurality of second electrode plates spaced apart from the plurality of first electrode plates;
separators between the plurality of first electrode plates and the plurality of second electrode plates; and
first electrode tabs connected to or integrally formed with the plurality of first electrode plates,
wherein the first electrode tabs comprise a plurality of first inner electrode tabs connected to some of the plurality of first electrode plates and a plurality of first outer electrode tabs connected to others of the plurality of first electrode plates, the plurality of first inner electrode tabs and the plurality of first outer electrode tabs being spaced apart from the plurality of first electrode plates.

2. The electrode assembly as claimed in claim 1, wherein:
the plurality of first inner electrode tabs and the plurality of first outer electrode tabs extend from the plurality of first electrode plates in a first direction, and
the plurality of first inner electrode tabs and the plurality of first outer electrode tabs face each other in a second direction intersecting the first direction.

3. The electrode assembly as claimed in claim 2, wherein:
a length of the plurality of first inner electrode tabs in the first direction increases in the second direction, and
a length of the plurality of first outer electrode tabs in the first direction increases in a direction opposite to the second direction.

4. The electrode assembly as claimed in claim 3, wherein the length of the plurality of first inner electrode tabs in the first direction and the length of the plurality of first outer electrode tabs in the first direction are 6 mm or more and 12 mm or less.

5. The electrode assembly as claimed in claim 2, 3 or 4, wherein:
a width of the plurality of first inner electrode tabs in a third direction decreases in the second direction,
a width of the plurality of first outer electrode tabs in the third direction decreases in the direction opposite to the second direction, and
the third direction intersects the first direction and the second direction.

6. The electrode assembly as claimed in any preceding claim, wherein the plurality of first inner electrode tabs and the plurality of first outer electrode tabs are point-symmetric with each other.

7. The electrode assembly as claimed in any preceding claim, wherein:
the plurality of first inner electrode tabs are bent in the second direction, and
the plurality of first outer electrode tabs are bent in the direction opposite to the second direction.

8. The electrode assembly as claimed in claim 7, wherein the plurality of first inner electrode tabs do not overlap the plurality of first outer electrode tabs in the first direction.

9. The electrode assembly as claimed in claim 3, wherein:
each of the plurality of first inner electrode tabs comprise a convex portion from one surface thereof facing the plurality of first outer electrode tabs, and
each of the plurality of first outer electrode tabs comprise a concave portion in one surface thereof facing the plurality of first inner electrode tabs to accommodate the convex portion.

10. The electrode assembly as claimed in claim 9, wherein the convex portion and the concave portion face each other in the second direction.

11. The electrode assembly as claimed in claim 9 or 10, wherein:
the plurality of first inner electrode tabs are bent in the second direction, and
the plurality of first outer electrode tabs are bent in the direction opposite to the second direction.

12. The electrode assembly as claimed in claim 11, wherein the plurality of first inner electrode tabs do not overlap the plurality of first outer electrode tabs in the first direction.

13. The electrode assembly as claimed in any preceding claim, further comprising second electrode tabs connected to the plurality of second electrode plates,
wherein the second electrode tabs comprise:
second inner electrode tabs connected to some of the plurality of second electrode plates; and
second outer electrode tabs connected to others of the plurality of second electrode plates, the plurality of second outer electrode tabs being spaced apart from the plurality of second inner electrode tabs.

14. The electrode assembly as claimed in claim 13, wherein the first electrode tabs and the second electrode tabs extend from the electrode assembly in a first direction.

15. A secondary battery, comprising:
the electrode assembly according to any preceding claim;
a case accommodating the electrode assembly;
a cap plate sealing the case; and
a first terminal protruding outward from the cap plate, the first terminal being connected to the first electrode tabs.
